Europäisches Patentamt

European Patent Office    (11) Numéro de publication : **0 102 273**

Office européen des brevets                            **B1**

(19)

(12)                    **FASCICULE DE BREVET EUROPÉEN**

(45) Date de publication du fascicule du brevet :
03.12.86

(51) Int. Cl.⁴ : **F 02 P  5/04,** F 02 D  43/00

(21) Numéro de dépôt : **83401543.0**

(22) Date de dépôt : **27.07.83**

(54) **Dispositif de commande de l'allumage et de l'injection de combustible pour un moteur à combustion interne.**

(30) Priorité : 11.08.82 FR 8213996

(43) Date de publication de la demande :
07.03.84 Bulletin 84/10

(45) Mention de la délivrance du brevet :
03.12.86 Bulletin 86/49

(84) Etats contractants désignés :
BE DE GB IT NL SE

(56) Documents cités :
EP-A- 0 013 846
US-A- 4 181 884
AUTOMOTIVE ENGINEERING, vol. 89, no. 8, août
1981, pages 28-34, Society of Automotive Engineers,
Inc., Dallas, Texas, US "Engine controls become
more cost effective"
PATENTS ABSTRACTS OF JAPAN, vol. 4, no. 164, 14
novembre 1980, page 49 M 41
ELECTRONIC DESIGN, vol. 29, no. 10, mai 1981,
pages 197-202, Waseca, MN., US R. HAINES: "Two
muCs on one chip split the silicon and the work"

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Avian, Philippe**
**12 rue de la Cerisaie**
**F-78920 Ecquevilly (FR)**
Inventeur : **Lepretre, Bernard**
**13 rue Mollien**
**F-92100 Boulogne Billancourt (FR)**

(74) Mandataire : **Colas, Jean-Pierre et al**
**Regie Nationale des Usines RENAULT (S.0804)**
**F-92109 Boulogne Billancourt Cedex (FR)**

## Description

La présente invention concerne un dispositif de commande de l'allumage et de l'injection de combustible pour un moteur à combustion interne, du type comportant un système de calcul numérique programmé pour calculer l'avance à l'allumage et la durée d'injection en fonction du régime et de la charge du moteur.

Dans tout dispositif de ce type, il est nécessaire de mesurer le régime du moteur et de connaître avec une bonne précision la position angulaire instantanée du vilebrequin de manière à déclencher l'allumage à l'angle calculé en fonction du régime et de la charge mesurés.

A cet effet, il est connu d'utiliser une cible solidaire en rotation du vilebrequin et présentant à sa périphérie un ou plusieurs accidents défilant devant un capteur fournissant un signal de synchronisation Sy à chaque passage d'un piston par une position prédéterminée tel que un point mort haut (PMH) et/ou un point mort bas (PMB). Un tel signal de synchronisation permet, entre deux PMH ou PMB consécutifs, de mesurer le régime avec une précision convenable pour le calcul de l'angle d'avance et de la durée d'injection et de déclencher le début de l'injection à l'instant voulu, généralement au point mort haut, mais il ne convient pas pour le déclenchement de l'allumage qui, pour un cycle donné, est décalé de plusieurs dizaines de degrés par rapport au PMH ou au PMB précédent.

La solution qui consiste à réaliser une interpolation électronique du signal de synchronisation n'est pas satisfaisante car, en cas de forte accélération ou décélération du moteur, la position angulaire reconstituée électroniquement ne coïncide pas avec la position angulaire vraie du vilebrequin.

Une autre solution consiste à utiliser une deuxième cible solidaire en rotation de la première et pourvue à sa périphérie de plusieurs dizaines de dents et de creux régulièrement répartis qui défilent devant un deuxième capteur. En outre, comme la résolution angulaire nécessaire pour le déclenchement de l'allumage conduirait à un nombre de dents et de creux incompatible avec une production en grande série, une interpolation électronique du signal provenant du deuxième capteur est de préférence effectuée. La synchronisation du signal d'interpolation est effectuée à chaque détection d'une nouvelle dent et/ou d'un nouveau creux, ce qui permet d'éviter toute erreur importante en cas de forte accélération ou décélération du moteur. Toutefois, cette deuxième solution a l'inconvénient d'être onéreuse sur le plan industriel car elle nécessite l'emploi de deux capteurs et de deux cibles qui, en outre, doivent être parfaitement calées angulairement l'une par rapport à l'autre.

Le brevet français 2 446 467 décrit un procédé qui permet de résoudre ce problème en mesurant la vitesse et en repérant la position angulaire du vilebrequin au moyen d'un seul capteur devant lequel défile une cible munie à sa périphérie d'une succession de dents et de creux et de laquelle au moins une dent a été supprimée pour constituer un repère absolu. Le brevet français 2 474 597 décrit un calculateur spécifique d'allumage mettant en œuvre ce procédé et permettant d'obtenir le signal de synchronisation Sy précité, un signal dent Sd image des dents de la cible et un signal d'interpolation ou signal vitesse V de fréquence n fois supérieure à Sd. A partir de ces signaux, le calculateur calcule l'angle d'avance à l'allumage, le temps de conduction de la bobine et commande celle-ci en conséquence. Un tel calculateur peut être constitué par le circuit intégré SN 96 528 de la Société TEXAS INSTRUMENTS.

S'agissant d'un circuit spécifique, un tel calculateur n'est pas programmable et ne convient donc pas pour assurer la fonction supplémentaire de commande de l'injection de carburant.

D'autre part, le traitement du signal provenant du capteur, si l'on désire avoir une dynamique suffisante de mesure de la vitesse de rotation et un repérage précis des PMH et/ou PMB, le calcul des angles de conduction de la bobine et d'avance à l'allumage, et le calcul de la durée d'injection nécessiteraient *a priori* d'utiliser un microprocesseur rapide et puissant, et par conséquent coûteux.

Une autre solution décrite dans l'article intitulé « Engine controls become more cost effective » de la revue Automotive Engineering, volume 89, N° 8, août 1981, consiste à utiliser deux microprocesseurs « single chip » travaillant en parallèle, l'un pour l'allumage, l'autre pour l'injection, à partir d'un certain nombre de paramètres dont certains sont communs. Un premier inconvénient de cette solution réside dans le fait que le repérage de la position angulaire instantanée du vilebrequin est assurée par une interpolation électronique du signal de synchronisation produisant une impulsion théoriquement tous les 0,35° de rotation : malheureusement, comme indiqué précédemment, ce repérage angulaire reconstitué s'avère erroné lorsque le vilebrequin subit de fortes accélérations ou décélérations, comme c'est le cas aux faibles vitesses de ralenti ou au démarrage. De plus, cette solution à deux microprocesseurs reste néanmoins coûteuse car pour une production en très grande série, le coût d'un microprocesseur même « single chip » est supérieur à celui d'un circuit intégré spécifique.

Sachant que les cadences de fabrication des systèmes d'injection électroniques sont encore actuellement notablement plus faibles que celles des allumages électroniques, l'invention vise à réaliser un dispositif de commande de l'allumage et de l'injection pour un moteur à combustion interne qui combine les avantages du faible coût de revient des circuits intégrés spécifiques pour les très grandes séries et des microprocesseurs « single chip » pour les séries plus faibles, et qui assure la mise en œuvre du procédé décrit au brevet français 2 446 467 pour la mesure de la vitesse et le repérage de la position angulaire instantanée précise du vilebrequin au moyen d'un seul capteur.

A cet effet, l'invention a pour objet un dispositif de commande de l'allumage et de l'injection de combustible pour un moteur à combustion interne, comprenant une cible solidaire en rotation du vilebrequin et associée à un capteur de position angulaire, au moins une bobine d'allumage, au moins un capteur de la pression dans la tubulure d'admission du moteur, au moins un injecteur et un système de calcul dans lequel sont mémorisées des valeurs d'angle d'avance et de durée d'injection adressables en fonction des paramètres régime du moteur et pression dans la tubulure d'admission et qui, à partir du signal de sortie du capteur de position, élabore un signal de synchronisation identifiant le passage de chaque piston par une position prédéterminée tel qu'un point mort haut et/ou un point mort bas et calcule le régime du moteur, le système de calcul comprenant un premier micro-calculateur programmé connecté au capteur de pression et commandant l'injecteur et un second micro-calculateur connecté au capteur de position et commandant la bobine d'allumage, caractérisé en ce que, d'une part, comme connu en soi, un seul capteur de position est associé à la cible munie à sa périphérie d'une succession de dents et de creux dont au moins une dent a été supprimée pour constituer un repère absolu et le second micro-calculateur est un calculateur spécifique d'allumage qui élabore ledit signal de synchronisation, un signal image des dents de la cible et un signal de vitesse de fréquence n fois supérieure à celle du signal dent à partir du signal de sortie du capteur de position et qui présente des mémoires mortes de coefficients de correction d'avance et d'avance pleine charge et des entrées additionnelles de correction d'avance, et en ce que, d'autre part, lesdites mémoires mortes du second calculateur contiennent une valeur nulle tandis que les valeurs d'angle d'avance et de durée d'injection sont toutes mémorisées dans le premier micro-calculateur programmé qui reçoit le signal de synchronisation du second micro-calculateur, calcule le régime du moteur et applique la valeur de l'angle d'avance aux entrées additionnelles du second micro-calculateur qui, en fonction desdits signaux élaborés à partir du signal de sortie du capteur, calcule l'angle de conduction de la bobine et commande la conduction de celle-ci conformément auxdits angles calculés de conduction et d'avance à l'allumage.

Grâce à cet agencement, le calculateur spécifique d'allumage travaille en esclave, sans subir de modification autre que celle d'une programmation particulière de la loi d'avance qui, pour une application « purement allumage », dépend en tout état de cause du moteur considéré, tout en déchargeant le microprocesseur de tâches de routine. Cet agencement permet de surmonter l'un des principaux handicaps des circuits intégrés spécifiques qui est leur inaptitude à d'autres applications que celles pour lesquelles ils ont été conçus à l'origine, et réalise du point de vue coût le compromis optimal évoqué plus haut par l'association d'un circuit spécifique fabriqué à très forte cadence pour l'allumage seul et l'allumage combiné à l'injection, et d'un microprocesseur concerné uniquement par la seconde de ces applications représentant des cadences sensiblement moindres.

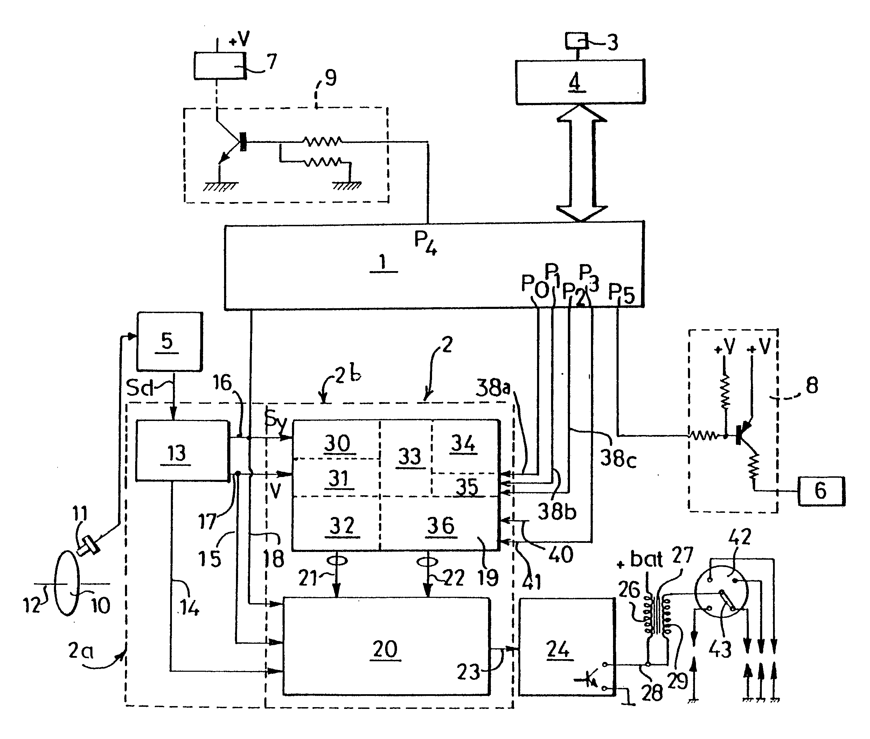

D'autres caractéristiques et avantages de l'invention ressortiront de la description qui va suivre d'un exemple de sa réalisation illustré par le dessin annexé sur lequel la figure unique montre l'architecture du système de calcul d'un dispositif de commande suivant l'invention.

En se référant au dessin, le système de calcul comprend essentiellement un premier calculateur 1 constitué par un microprocesseur programmé du type courant (« single chip ») tel que, par exemple, le microprocesseur MC 6801, et un second calculateur 2 qui sera décrit plus en détail dans la suite.

Le microprocesseur 1 reçoit d'un capteur 3 l'information pression dans la tubulure d'admission convertie sous forme numérique par un convertisseur numérique-analogique 4, et du calculateur 2 un signal de synchronisation Sy à partir duquel il calcule le régime du moteur et qui lui permet d'identifier le passage de chaque cylindre au PMH. Le microprocesseur 1 contient en mémoire des valeurs d'angle d'avance et de durée d'injection adressables en fonction des paramètres régime et pression et calcule, sous la commande du signal de synchronisation Sy, la durée d'injection pour la commande d'un ou plusieurs injecteurs 6 et d'une pompe d'injection 7 par l'intermédiaire de circuits de puissance 8 et 9 respectivement. Le microprocesseur transmet par ses sorties Po, $P_1$, $P_2$ et $P_3$ la valeur calculée de l'angle d'avance à l'allumage au calculateur 2.

Le calculateur 2 comporte une première section 2a et une seconde section 2b. La première section 2a est constituée d'un bloc 13 de traitement numérique qui reçoit en entrée, après mise en forme par le circuit analogique 5, constitué par exemple par le circuit SN 96 532 de la Société Texas Instruments, le signal prélevé par un capteur de position 11 détectant le passage des dents dont est munie à sa périphérie une cible 10 fixée sur le vilebrequin 12 du moteur à combustion interne et tournant au synchronisme avec lui. A partir du signal $S_d$ de sortie du circuit analogique 5, le bloc 13 produit le signal de synchronisation Sy et un signal de vitesse V de fréquence n fois supérieure à Sd. Ce bloc 13 et la manière suivant laquelle sont élaborés les signaux Sy et nSd sont décrits dans le brevet français 2 446 467 auquel on pourra se reporter.

La section 2b comporte un bloc de calcul 19 qui reçoit sur une entrée 16 le signal de synchronisation Sy et sur une seconde entrée 17 le signal de vitesse V.

Les parties essentielles du bloc de calcul 19 sont les suivantes : un séquenceur 30 ; un étage de mesure de la vitesse 31 ; une mémoire morte 32 ; un étage de mesure de pression 33 ; un étage de sécurité 34 pour se prémunir contre tout incident de fonctionnement du bloc de calcul 19 ; un étage de corrections 35 relié par trois conducteurs d'entrée 38a, 38b ; 38c aux sorties Po, P1 et P2 respectivement du microprocesseur 1 et un étage 36 de calcul de l'angle d'avance à l'allumage recevant des informations de la sortie P3 du microprocesseur 1 par une entrée 41 d'impulsions série. Ce bloc de calcul a été décrit dans les brevets français 2.327.421, 2.349.041 et 2.414.127.

Le bloc de calcul 19 délivre par ses sorties respectives 21 et 22 deux nombres binaires qui correspondent respectivement à l'angle de mise en conduction de la bobine 27 exprimé en nombre de dents de la cible 10 sur sa sortie 21 et à l'angle d'avance à l'allumage exprimé en nombre de dents de la cible 10 et en nombre de subdivisions d'entre deux dents de ladite cible sur sa sortie 22. Ces deux nombres binaires parviennent par les conducteurs 21 et 22 en entrée sur un bloc 20 de génération du signal de commande de la bobine 27. Le bloc 20 reçoit aussi en entrée trois signaux par les conducteurs 14, 15 et 18 qui sont respectivement le signal capteur mis en forme Sd, le signal de vitesse V et le signal de synchronisation Sy. Le bloc de génération 20 du signal de commande de la bobine fournit sur sa sortie 23 un signal de faible puissance qui est transmis à un étage de puissance amplificateur 24 dont la sortie 28 est reliée à la bobine d'allumage 27 ayant un enroulement primaire 26 et un enroulement secondaire 29 relié par une de ses extrémités à la partie centrale d'un distributeur 42 autour de laquelle tourne le bras mobile 43 qui met successivement en communication, au cours de sa rotation, le secondaire 29 de la bobine d'allumage 27 avec les bougies des différents cylindres du moteur pour provoquer l'explosion et la combustion du mélange contenu dans les cylindres. Ce dernier ensemble, comprenant le bloc 20 de génération du signal de commande de la bobine 27 et l'étage amplificateur de puissance 24, a été décrit dans la demande de brevet français 2.474.597.

Le calculateur 2 qui vient d'être décrit sommairement et dont le fonctionnement détaillé est explicité dans les brevets précités peut être constitué par un circuit intégré tel que le circuit SN 96 528 de la Société Texas Instruments. Ce circuit est en principe destiné à calculer de façon autonome l'angle de conduction de la bobine 27 et l'angle d'avance à l'allumage. Dans le dispositif suivant l'invention, il ne remplit que la première de ces fonctions, la seconde étant assurée par le microprocesseur 1. A cet effet, les entrées additionnelles 38a, 38b, 38c utilisées normalement pour recevoir des corrections additionnelles et aléatoires provenant de divers capteurs et l'entrée 41 de correction d'avance en fonction du cliquetis (entrées qui sont décrites dans la demande de brevet français 2 485 641) sont, dans le présent dispositif, destinées à recevoir des corrections permanentes provenant du microprocesseur 1 et servant à générer la loi d'allumage. De plus, contrairement aux explications données dans la demande de brevet français 2 485 641, les mémoires mortes des coefficients de correction d'avance et d'avance pleine charge contiennent toute la valeur 0° puisque les corrections envoyées par le microprocesseur 1 aux entrées additionnelles 38a, 38b, 38c et 41 correspondent à la valeur calculée de l'angle d'avance à l'allumage.

Enfin, le bloc de calcul 19 ne reçoit pas d'information « pression » contrairement à ce qui est indiqué dans la demande de brevet français 2 485 641 puisque c'est le microprocesseur 1 qui reçoit directement cette information du convertisseur analogique/numérique 4, ce qui permet d'utiliser un seul capteur de pression 3 pour calculer l'angle d'avance à l'allumage et la durée d'injection.

La cible 10 comprend par exemple 44 dents régulièrement espacées dont deux fois deux dents ont été enlevées à 90° de chaque point mort haut ou point mort bas dans le cas d'un moteur à quatre cylindres. Le signal Sd issu du capteur 11 et mis en forme par le circuit analogique 5 est appliqué au calculateur 2. Le bloc 13 opère le traitement de ce signal Sd (à ne pas confondre avec le signal Sd du brevet français 2 446 467 précité qui, lui, désigne le signal dent reconstitué, c'est-à-dire le signal capteur mis en forme et dans lequel on a en outre reconstitué électroniquement les dents manquantes) de manière à produire le signal Sy qui identifie le passage des pistons à un point mort haut. Le microprocesseur qui reçoit par ailleurs ce signal Sy peut alors calculer le régime du moteur et, à partir de l'information pression provenant du convertisseur 4, l'angle d'avance à l'allumage et la durée d'injection, en synchronisme avec les cycles moteurs, suivant des algorithmes appropriés et qui ne seront pas décrits, de tels algorithmes étant bien connus des spécialistes de la technique.

Grâce au signal de synchronisation Sy et à son horloge interne, le microprocesseur 1 commande le début de l'injection à un instant donné après le point mort haut et pour la durée calculée.

Par ailleurs, le microprocesseur 1 indique au bloc 19 quel angle d'avance il doit fournir au bloc 20. En programmant par exemple les valeurs 8°, 16° et 32° volant pour les corrections additionnelles sur les entrées 38a, 38b et 38c, le microprocesseur 1 peut indiquer toutes les avances comprises entre 0° et 56° volant moteur par pas de 8°. La valeur maximale de 56° est en général largement suffisante pour tous les moteurs à combustion interne. La sortie P3 du microprocesseur 1 est utilisée pour affiner la génération de la loi d'avance et obtenir une précision de 1° sur l'angle d'avance. A cet effet, la sortie P3 du microprocesseur 1 est reliée à l'entrée 41 du bloc de calcul 19, dont une autre entrée 40, qui commande le signe de la correction appliquée à l'entrée 41, est pré-positionnée pour que ce signe soit négatif. Le microprocesseur 1 n'a donc à envoyer en parallèle qu'une information « 0 » ou « 1 » sur les trois entrées 38a, 38b et 38c pour dégrossir la valeur d'avance à générer par pas de 8°, valeur qui est décrémentée de degré en degré par l'envoi à l'entrée 41 d'un nombre d'impulsions compris entre 0 et 7 pour venir corriger la valeur « dégrossie » et indiquer au bloc 19, avec une résolution de 1°, la valeur d'avance à prendre en compte.

On pourra par exemple générer un angle d'avance de 22° volant en commandant deux des entrées 38a, 38b, 38c pour la génération de « corrections » de 8° et 16°, et le microprocesseur n'aura qu'à envoyer deux impulsions série en 41 pour que le bloc de calcul 19 délivre effectivement cette valeur de 22° volant avec un angle de conduction que le calculateur 2 aura déterminé, comme indiqué dans le brevet français 2 493 412 ou 2 474 597, à partir de la mesure du régime du moteur qu'il aura effectué parallèlement au microprocesseur 1. Le temps perdu par le microprocesseur 1 pour envoyer les informations nécessaires au calculateur 2 est donc très court.

Le système de calcul du dispositif de commande et d'allumage suivant l'invention est donc particulièrement peu coûteux puisqu'il ne nécessite qu'un seul capteur de pression et qu'il associe à un microprocesseur de type courant et peu puissant un calculateur conçu initialement pour générer de façon autonome la loi d'allumage et produit en grande série à un faible coût.

L'utilisation d'un microprocesseur peu puissant est rendue possible parce que celui-ci est déchargé de l'élaboration du signal de synchronisation et des fonctions afférentes à la commande de la bobine d'allumage, à savoir calcul de l'angle de conduction, régulation du courant et « vary-Dwell ».

### Revendications

1. Dispositif de commande de l'allumage et de l'injection de combustible pour un moteur à combustion interne, comprenant une cible (10) solidaire en rotation du vilebrequin (12) et associée à un capteur de position angulaire (11), au moins une bobine d'allumage (27), au moins un capteur (3) de la pression dans la tubulure d'admission du moteur, au moins un injecteur (6) et un système de calcul (1, 2) dans lequel sont mémorisées des valeurs d'angle d'avance et de durée d'injection adressables en fonction des paramètres régime du moteur et pression dans la tubulure d'admission et qui, à partir du signal de sortie du capteur de position (11), élabore un signal de synchronisation (Sy) identifiant le passage de chaque piston par une position prédéterminée tel qu'un point mort haut et/ou un point mort bas et calcule le régime du moteur, le système de calcul comprenant un premier microcalculateur programmé (1) connecté au capteur de pression (3) et commandant l'injecteur (6) et un second micro-calculateur (2) connecté au capteur de position (11) et commandant la bobine d'allumage (27), caractérisé en ce que, d'une part, comme connu en soi, un seul capteur de position (11) est associé à la cible (10) munie à sa périphérie d'une succession de dents et de creux dont au moins une dent a été supprimée pour constituer un repère absolu et le second micro-calculateur (2) est un calculateur spécifique d'allumage qui élabore ledit signal de synchronisation (Sy), un signal (Sd) image des dents de la cible et un signal de vitesse (V) de fréquence n fois supérieure à celle du signal dent (Sd) à partir du signal de sortie du capteur de position et qui présente des mémoires mortes (32) de coefficients de correction d'avance et d'avance pleine charge et des entrées additionnelles (38a, 38b, 38c, 41) de correction d'avance, et en ce que, d'autre part, lesdites mémoires mortes du second calculateur (2) contiennent une valeur nulle tandis que les valeurs d'angle d'avance et de durée d'injection sont toutes mémorisées dans le premier microcalculateur programmé (1) qui reçoit le signal de synchronisation (Sy) du second micro-calculateur (2), calcule le régime du moteur et applique la valeur de l'angle d'avance aux entrées additionnelles (38a, 38b, 38c, 41) du second micro-calculateur (2) qui, en fonction desdits signaux élaborés à partir du signal de sortie du capteur, calcule l'angle de conduction de la bobine (27) et commande la conduction de celle-ci conformément auxdits angles calculés de conduction et d'avance à l'allumage.

2. Dispositif suivant la revendication 1, caractérisé en ce que les entrées additionnelles comprennent des entrées parallèles (38a, 38b, 38c) programmées avec des valeurs entières supérieures à la résolution finale de l'angle d'avance à l'allumage et auxquelles le premier calculateur (1) applique le nombre le plus proche de l'angle d'avance calculé, et au moins une entrée série (41) à laquelle le premier calculateur (1) applique des impulsions pour corriger ledit nombre et indiquer au second calculateur (2) la valeur exacte de l'angle d'avance calculé.

3. Dispositif selon l'une quelconque des revendications 1 et 2, caractérisé en ce que, parallèlement au premier calculateur (1), le second calculateur (2) mesure le régime du moteur et calcule l'angle de conduction de la bobine d'allumage à partir de ladite valeur mesurée du régime.

### Claims

1. Apparatus for controlling ignition and fuel injection for an internal combustion engine comprising a target (10) which is non-rotatably fixed with respect to the crankshaft (12) and which is associated with an angular position detector (11), at least one ignition coil (27), at least one detector (3) for detecting the pressure in the intake manifold of the engine, at least one injector (6) and a computing system (1, 2) in which are stored addressable values in respect of angle of advance and injection period, in dependence on the parameters of the operating state of the engine and the pressure in the intake manifold and which, from the output signal of the position detector (11), produces a synchronisation signal (Sy) identifying the movement of each piston through a predetermined position such as a top dead centre point and/or a bottom dead centre point, and computes the operating state of the engine, the computing system comprising a first programmed microcomputer (1) connected to the pressure detector (3) and controlling the injector (6) and a second microcomputer (2) connected to the position detector (11) and controlling the ignition coil (27), characterised in that, on the one hand, as is known *per se*, a single position detector (11) is associated with the target (10) which is provided at its periphery with a succession of teeth and recesses of which at least one tooth has been removed to form an absolute index means and the second microcomputer (2) is a specific ignition computer which produces said synchronisation signal (Sy), a signal (Sd) which is an image of the teeth of the target and a speed signal (V) of a frequency n times greater than that of the tooth signal (Sd), from the output signal of the position detector, and which has read only memories (32) for coefficients for correction of advance and full load advance and additional inputs (38a, 38b, 38c, 41) for correcting advance, and that on the other hand, said read only memories of the second computer (2) contain a value zero while the values in respect of angle of advance and injection period are all stored in the first programmed microcomputer (1) which receives the synchronisation signal (Sy) from the second microcomputer (2), computes the operating state of the engine and applies the value of the angle of advance to the additional inputs (38a, 38b, 38c, 41) of the second microcomputer (2) which, in dependence on said signals produced from the output signal of the detector, computes the conduction angle of the coil (27) and controls the conduction thereof in accordance with said computed angles of conduction and ignition advance.

2. Apparatus according to claim 1 characterised in that the additional inputs comprise parallel inputs (38a, 38b, 38c) which are programmed with integral values which are higher than the final resolution of the ignition advance angle and to which the first computer (1) applies the number closest to the computed angle of advance, and at least one series input (41) to which the first computer (1) applies pulses to correct said number and to indicate to the second computer (2) the exact value of the computed angle of advance.

3. Apparatus according to either one of claims 1 and 2 characterised in that, in parallel with the first computer (1), the second computer (2) measures the state of the engine and computes the angle of conduction of the ignition coil from said measured value of the state of the engine.

**Patentansprüche**

1. Zünd- und Einspritzungssteueranlage für eine Brennkraftmaschine, mit einer drehfest mit der Kurbelwelle (12) verbundenen Markierung (10), die einem Winkelfühler (11) zugeordnet ist mit wenigstens einer Zündspule (27), wenigstens einem Druckfühler (3) im Einlaßrohr des Motors, wenigstens einer Einspritzanordnung (6) und einer Rechneranordnung (1, 2), in der die Werte der Vorzündung und der Einspritzdauer gespeichert sind und als Funktion der den Betriebszustand des Motors und den Druck im Einlaßrohr darstellenden Parameter adressierbar sind und die ausgehend vom Ausgangssignal des Winkelfühlers (11) ein Synchronisationssignal (Sy) erzeugt, das den Durchgang eines jeden Kolbens durch eine vorgegebene Stellung identifiziert z. B. einen oberen und/oder einen unteren Totpunkt und den Belastungszustand des Motors errechnet, wobei die Rechneranordnung einen ersten programmierten Mikrorechner (1) aufweist, der mit dem Druckfühler (3) verbunden ist und die Einspritzanordnung (6) steuert, sowie einen zweiten Mikrorechner (2) aufweist, der mit dem Winkelfühler (11) verbunden ist und die Zündspule (27) steuert, dadurch gekennzeichnet, daß einerseits in an sich bekannter Weise ein einziger Winkelfühler (11) der Markierung (10) zugeordnet ist, die an ihrem Umfang eine Vielzahl von Zähnen und Aussparungen aufweist, wobei wenigstens ein Zahn fehlt um ein absolute Kennung zu bilden und daß der zweite Mikrorechner (2) ein besonderer Zündrechner ist, der das genannte Synchronisationssignal (Sy) erzeugt sowie ein Signal ($S_d$) als Darstellung der Zähne der Markierung und ein Geschwindigkeitssignal (V), dessen Frequenz n mal größer ist als diejenige des Signals der Zähne (Sd) ausgehend vom Ausgangssignal des Winkelfühlers und der Nur-Lese-Speicher (32) aufweist für Korrekturfaktoren für die Vorzündung und die Vollast-Vorzündung sowie zusätzliche Eingänge (38a, 38b, 38c, 41) zur Korrektur der Vorzündung und daß andererseits die Nur-Lese-Speicher des zweiten Rechners (2) einen Wert Null enthalten während alle Werte des Vorzündwinkels und der Einspritzdauer im ersten programmierten Mikrorechner (1) gespeichert sind, der das Synchronisationssignal ($S_y$) vom zweiten Mikrorechner (2) erhält, der den Betriebszustand des Motors errechnet und den Wert des Vorzündwinkels den zusätzlichen Eingängen (38a, 38b, 38c, 41) des zweiten Mikrorechners (2) zuführt, der den Leitwinkel der Spule (27) als Funktion der vom Ausgangssignal des Fühlers abgeleiteten Signale berechnet und deren Leitfähigkeit steuert in Übereinstimmung mit den berechneten Winkeln der Leitfähigkeit und der Vorzündung.

2. Anlage nach Anspruch 1, dadurch gekennzeichnet, daß die zusätzlichen Eingänge parallele Eingänge (38a, 38b, 38c) aufweisen, die mit ganzzahligen Werten programmiert sind, welche größer sind als die endgültige Auflösung des Vorzündwinkels und denen der erste Rechner (1) die den berechneten Vorzündwinkeln nächstkommende Zahl zuführt und wenigstens einen Serieneingang (41), dem der erste Rechner (1) Impulse zuführt um diese Zahl zu korrigieren und dem zweiten Rechner (2) den genauen Wert des berechneten Vorzündwinkels anzuzeigen.

3. Anlage nach einem der Ansprüche 1 und 2, dadurch gekennzeichnet, daß parallel zum ersten Rechner (1) der zweite Rechner (2) den Betriebszustand des Motors mißt und den Leitfähigkeitswinkel der Zündspule ausgehend vom gemessenen Wert des Betriebszustandes berechnet.